# EUROPÄISCHE PATENTSCHRIFT

(11) **EP 3 857 085 B1**
(45) Veröffentlichungstag und Bekanntmachung des Hinweises auf die Patenterteilung: **12.01.2022**
(21) Anmeldenummer: 19769475.5
(22) Anmeldetag: 16.09.2019
(51) Int. Cl.: F04D 29/049, F16C 33/66, F16C 19/08, F16C 19/18, F16C 33/58, F16C 33/78, F16C 33/80, F04D 29/06, F16N 7/22

(54) **WÄLZLAGER MIT DICHTUNGSANORDNUNG UND WASSERPUMPE MIT DEMSELBEN**
ROLLER BEARINGS WITH SEAL ASSEMBLY AND WATER PUMP WITH THE SAME
ROULEMENTS À ROULEAUX AVEC ASSEMBLAGE DE JOINT ET POMPE À EAU AVEC CELUI-CI

(30) Priorität: 27.09.2018 DE 102018123908
(43) Veröffentlichungstag der Anmeldung: 04.08.2021
(73) Patentinhaber: NIDEC GPM GmbH, 98673 Auengrund /OT Merbelsrod (DE)
(72) Erfinder: LUDWIG, Paul, 99096 Erfurt (DE); PAWELLEK, Franz, 96486 Lautertal (DE)
(74) Vertreter: Kuhnen & Wacker Patent- und Rechtsanwaltsbüro PartG mbB
(86) Internationale Anmeldenummer: PCT/EP2019/074683
(87) Internationale Veröffentlichungsnummer: WO 2020/064397

(56) Entgegenhaltungen:
- FR-A1- 2 183 543
- JP-A- H10 103 347
- JP-A- 2008 215 418
- JP-U- S59 168 519
- US-A- 4 609 293

## Beschreibung

Die vorliegende Erfindung betrifft ein Wälzlager mit einer Dichtungsanordnung für Wasserpumpen sowie eine Wasserpumpe für einen Kühlmittelkreislauf in einem Fahrzeug, die das Wälzlager mit der Dichtungsanordnung umfasst.

Für Wasserpumpen, die in Fahrzeugen eingesetzt werden, ist ein Pumpenaufbau verbreitet, bei dem die Pumpenwelle mittels eines einzigen Kompaktlagers mit zwei Wälzkörperreihen, das sowohl radiale als auch axiale Kräfte der Welle aufnimmt, in dem Pumpengehäuse gelagert ist. Diese Anordnung ermöglicht einen kompakten Aufbau in Bezug zur Wellenlänge und verschafft Vorteile hinsichtlich der Anzahl von Gehäusepassungen und Lagerspielen, Wellenfluchtung sowie der Fertigung und Montage.

Wälzkörperlager sind im Allgemeinen empfindlich gegen eindringende Feuchtigkeit, da die verwendeten Materialen, insbesondere geeignete Stähle der Wälzkörper und Laufbahnen, für die Anwendung in Feuchtigkeit nicht ausreichend korrosionsbeständig sind. An Lagerdichtungen treten stets geringe Leckagen auf. Ein Eintreten von Feuchtigkeit führt durch Korrosion zur Herabsetzung der Oberflächengüte der Wälzkörper und Laufbahnen, was zu einer höheren Reibung des Lagers sowie entsprechender Wärmeentwicklung bis hin zum Lagerschaden führt und einen Defekt der Wasserpumpe nach sich zieht. Zudem werden Wasserpumpen zunehmend elektrisch angetrieben, wobei antriebsseitig häufig ein Elektromotor vom Trockenläufertyp eingesetzt wird. Ebenso wie das Kompaktlager muss auch der Elektromotor vor einem Eindringen einer Kühlmittelleckage aus dem Förderstrom der Wasserpumpe geschützt werden.

Ein Wellenlager bzw. dessen Abdichtung, die per se einem Reibungsverschleiß und einer Versprödung durch Druck- und Temperaturschwankung unterliegt, stellt oftmals den begrenzenden Faktor der Lebensdauer einer Pumpe dar. Somit kommt einer langlebigen Dichtungsanordnung einer Wasserpumpe, d.h. einer Flüssigkeitsabdichtung zwischen dem Förderstrom in einer Pumpenkammer und dem Kompaktlager sowie dem dahinterliegenden antriebsseitigen Bereich des Pumpengehäuses eine große Bedeutung hinsichtlich der Betriebszuverlässigkeit eines Fahrzeugs zu.

Wälzlager sind herkömmlicher Weise zwischen einer Welle oder einem Innenring und einem Außenring durch radial dichtende Dichtungen in Form von Dichtscheiben oder Dichtringen im Bereich der Wälzkörper abgedichtet. Je geringer die radialen Abmessungen eines Wälzlagers sind, desto schwieriger wird es aufgrund des kleineren Bauraums im Lager eine wirksame radiale Dichtung, wie einen standardisierten Simmerring bzw. einen Radial-Wellendichtring (DIN 3760) oder dergleichen, zu verwenden.

Ferner sind aus dem Stand der Technik Abdichtungen von Wellen zu statischen Bauteilen einer Wasserpumpe durch Wellendichtringe mit Lippendichtung, Gleitringdichtungen oder dergleichen bekannt. Die Lebensdauer derartiger Radialwellendichtungen hängt stark von den Schmierverhältnissen an der Dichtlippe ab. Trockenlaufende Dichtlippen, die lediglich durch eine Kühlmittelleckage geschmiert werden, haben aufgrund des Reibwertes des Schmierfilms und eines nachfolgend erläuterten Phänomens eine kürzere Lebensdauer als Dichtlippen in einer Umgebung eines schmierölführenden Systems. So wurde eine Belagbildung unter der dynamischen Dichtfläche der Dichtungslippe beobachtet, welche die Dichtfunktion nachhaltig beeinträchtigt. Die Ursache liegt darin, dass Leckagetropfen eines Kühlmittels nach einem Passieren der Dichtstelle verdampfen und kristalline Bestandteile aus dem Kühlmittel hinterlassen, die einen Belag auf der Welle oder dem Innenring bilden.

Darüber hinaus sind Konzepte zur Abdichtung von Pumpenwellen bekannt, die eine Abführung einer unvermeidlichen Leckage an einer Wellendichtung vorsehen. Ein entsprechender Pumpenaufbau umfasst in der Regel eine Leckagekammer, die in einem Pumpengehäuse unterhalb der Pumpenwelle angeordnet ist und eine angesammelte Leckage über eine Ablaufbohrung oder eine feuchtigkeitsdurchlässige Membran abführt.

Eine zum Anmeldetag dieser Patentanmeldung noch nicht veröffentlichte Patentanmeldung DE 10 2018 105 088.7 derselben Anmelderin betrifft einen derartigen Pumpenaufbau und eine Dichtungsanordnung für eine Pumpe mit einem Wälzlager und einem trockenlaufenden Elektromotor. Eine Leckagekammer ist in dem Gehäuse ausgebildet, um eine Leckage nach einer Wellendichtung zu einer Pumpenkammer und vor einer Wellendichtung zu dem Wälzlager abzufangen und somit das Wälzlager, den Elektromotor und eine Steuerungselektronik vor Schäden durch eintretende Nässe zu schützen. Im Betrieb wird die angesammelte Leckage erwärmt und verdunstet durch eine Bohrung zur Atmosphäre. Ein derartiger Aufbau erfordert nachteilhafter Weise zumindest einen zusätzlichen Bauraum für die Leckagekammer im Pumpengehäuse.

Aus anderen technischen Anwendungen sind gattungsferne Wälzlager bekannt geworden, in denen zum Zwecke der Schmierung von Wälzkörpern ein sogenanntes "Solid Oil" eingesetzt wird. "Solid Oil" wird im Prinzip durch eine übersättigte Öl-Imprägnierung einer kapillar wirkenden Porosität in einer Oberfläche oder einem Material eines Körpers erzeugt. Es sind Wälzlager bekannt, bei denen im Bereich einer Wälzkörperführung oder einem Lagerkäfig eine derartige Struktur bereitgestellt ist, um eine in Kontakt gebrachte Oberfläche der Wälzkörper mit Öl zu benetzen. Eine bekannte Nutzung einer solchen Anordnung dient der Vermeidung von Verschmutzung durch äußere Einflüsse, wie z.B. an einer Radnabe oder dergleichen. Durch die im Inneren des Lagers konzentrierte Schmierung wird eine Ansammlung von Staub oder Schmutzpartikeln unterdrückt, die üblicherweise über einen bis zur Lagerdichtung nach außen reichenden Schmierfilm eindringt. Außerdem wird eine Tendenz zum Austreten des Öls aus dem Lager durch kapillare Bindung vermindert. Eine Nutzung dieser Eigenschaft ist auch aus verfahrenstechnischen Anwendungen der Lebensmittelindustrie bekannt, wobei eine Kontamination eines Produkts durch ein Schmiermittel eines Lagers z.B. in einem Rührwerk oder dergleichen verhindert werden soll. Eine weitere bekanntgewordene Nutzung besteht in einer Anwendung von Vakuumpumpen, wo eine Lagerschmierung im Pumpenbetrieb einem Unterdruck ausgesetzt sein kann.

Die EP 1 775 488 A1 beschreibt für letzteren Anwendungskontext einen Wälzlagerkäfig mit einem Formteil aus porösem Kunstharz zum Halten von Wälzkörpern, das mit einem Schmieröl imprägniert ist. In einer Peripherie der Wälzkörper kann zusätzlich zu der Imprägnierung mit dem Schmieröl ferner noch ein Schmierfett aufgebracht sein, das ein Volumen von 5 bis höchstens 20 % des Lagers füllt, um eine Leckage nach außen möglichst gering zu halten.

JP 2008 215418 A offenbart ein Wälzlager eines Schienenfahrzeugs, bei dem sich ein Schmierstoffdepot bis zum Kontakt mit den Dichtungen erstreckt. In diesem Dokument wird jedoch kein Druck von einem externen Fluid wie in einer Wasserpumpe offenbart.

US 4 609 293 A, JP H10 103347 A und JP S59 168519 U offenbaren jeweils Schmierstoffdepots, die nicht das gesamte Innenvolumen des Wälzlagers ausfüllen.

Eine Aufgabe der Erfindung besteht darin, ein als Kompaktlager geeignetes Wälzlager mit integrierter Dichtungsanordnung zu schaffen, das

Die Aufgabe wird durch ein als Kompaktlager ausgeführtes Wälzlager mit einer Dichtungsanordnung nach den Merkmalen des Anspruchs 1 gelöst.

Das erfindungsgemäße Wälzlager mit Dichtungsanordnung zeichnet sich insbesondere dadurch aus, dass ein Schmierstoffdepot mit einem zumindest bereichsweise porösen Substrat umlaufend in einem radialen Kontakt zu einem Wellenabschnitt und einem Außenring angeordnet ist; wobei das Schmierstoffdepot in Poren des Substrats einen wasserunlöslichen Schmierstoff enthält, und ein Volumen des Schmierstoffdepots und ein Volumen einer Schmierstofffüllung mit dem Schmierstoff ein Gesamtvolumen von Freiräumen zwischen einer nassseitigen Wellendichtung und einer trockenseitigen Wellendichtung einnehmen.

Die Erfindung sieht erstmals vor, ein Schmierstoffdepot aus teils fester und teils viskoser Struktur nicht nur zur Lagerschmierung eines Wälzlagers einzusetzen, sondern durch eine Anordnung des mit Schmierstoff gesättigten Substrats in Kombination mit einer Füllung desselben Schmierstoffs auch eine langlebige Dichtungsfunktion gegen eine axiale Durchdringung eines Mediums durch ein Wälzlager bereitzustellen. Die vorteilhafte Dichtungsfunktion wird nachstehend für die Anwendung eines Wellenlagers in der Betriebsumgebung einer Wasserpumpe erläutert.

In ihrer allgemeinsten Form liegt der Erfindung die Erkenntnis zugrunde, ein Schmierstoffdepot in einem Wälzlager einzusetzen, das ein lokal gebundenes viskoses Polster gegenüber einem eindringenden Medium erzeugt und dabei verschieden ausgerichtete Wirkungen zu einer Dichtungsfunktion in dem Wälzlager beiträgt.

Im Betrieb einer Wasserpumpe stellt sich ein Druckgleichgewicht zwischen einem ansteigenden Förderdruck in der Pumpenkammer und dem Schmierstoffdepot im Wälzlager ein, während ein Auswaschen des wasserunlöslichen Schmierstoffs aus den Poren des Substrats verhindert wird. Eine schwammartige Morphologie des Schmierstoffdepots führt bei einem ansteigenden äußeren Druck des Fördermediums in Richtung der Wälzkörperreihen dazu, dass eine Ausdehnung des Schmierstoffdepots in einer radialen Richtungskomponente eine abtrennende Wirkung zu einer dahinter liegenden Schmierstofffüllung erhöht. Eine Verschiebung bzw. Kompression des Schmierstoffdepots bewirkt in einer axialen Richtungskomponente eine erhöhte Anpresskraft auf die Wellendichtung zur trockenen Seite, wobei eine Schmierstofffüllung hinter dem Schmierstoffdepot die Anpresskraft auf die entsprechende Dichtlippe überträgt und diese zugleich schmiert.

Durch das erfindungsgemäße Konzept des Wälzlagers mit Dichtungsanordnung ergeben sich in einer Wasserpumpe mehrere Vorteile.

Die poröse Struktur des Substrats und eine Wasserunlöslichkeit des Schmierstoffs bewirken eine lokale Bindung des Schmierstoffs. Es wird ein Auswaschen des Wälzlagers durch ein eintretendes Fördermedium während des Druckausgleichs im Betrieb unterbunden und eine geringe Reibung sowie ein geringer Verschleiß der Wälzkörper und Laufbahnen sichergestellt.

Die beiden gegenüberliegenden Wellendichtungen werden mit dem Schmierstoff versorgt, so dass die entsprechenden Dichtungslippen mit einem Schmierfilm auf der Welle gleiten. Die mit Schmierstoff geschmierten Wellendichtungen erreichen eine erheblich längere Lebensdauer im Vergleich zu kühlmittelgeschmierten Wellendichtungen.

Die Dichtungsanordnung beansprucht wenig Bauraum innerhalb des Aufbaus des Wälzlagers und stellt zugleich eine Schmierung auf die Lebensdauer bereit. Demzufolge eignet sich das Wälzlager mit Dichtungsanordnung für den Einsatz als Kompaktlager, d. h. als einzige Einheit zur Lagerung und Abdichtung einer Pumpenwelle.

Das Zusammenwirken der Schmierstofffüllung mit dem mit Schmierstoff gesättigten Substrat des Schmierstoffdepots und den Wellendichtungen verbessert eine Dichtungswirkung gegen eine axiale Durchdringung des Wälzlagers. Somit eignet sich das Wälzlager mit Dichtungsanordnung für Anwendungen mit feuchtigkeitsempfindlichen Baugruppen, wie insbesondere einem Elektromotor vom Trockenläufertyp oder einer Elektronik. Trockenläufer haben aufgrund eines geringeren Luftspalts zwischen Rotor und Stator eine höhere Effizienz als ein Nassläufer-Elektromotor. Trockenläufer sind im Vergleich kostengünstiger, da sie als separate Einheit mit standardisierten Komponenten, d h. unabhängig von einer typenspezifischen Geometrie einer Pumpe bezogen werden können.

Im Vergleich zu Aufbauten mit einem Leckagebehälter, können trotz zuverlässiger Abdichtung ein Aufbau des Gehäuses vereinfacht werden, ein Bauraum und Materialkosten eingespart sowie kompaktere Gesamtabmessungen erlangt werden. Zudem können Labyrinthdichtungen oder ähnlich strukturierte Dichtungen durch günstigere Wellendichtungen mit einer vergleichsweise einfach gestalteten Dichtungslippe ersetzt werden.

Vorteilhafte Weiterbildungen des erfindungsgemäßen Wälzlagers mit Dichtungsanordnung sind Gegenstand der abhängigen Ansprüche.

Gemäß einem Aspekt der Erfindung kann das poröse Substrat des Schmierstoffdepots zwischen der nassseitigen Wellendichtung und einer Wälzkörperreihe angeordnet sein und mit der nassseitigen Wellendichtung in Kontakt stehen. Somit wird die Wellendichtung zur nassen Seite nicht ausschließlich durch die Schmierstofffüllung versorgt, sondern steht auch mit dem gesättigten Substrat des Schmierstoffdepots in Kontakt. Es kann eine konstantere oder gegen Druckschwankungen unempfindlichere Schmierfilmbildung an einer dynamischen Dichtungsfläche der entsprechenden Dichtungslippe sichergestellt und eine Belagbildung durch Kühlmittelrückstände besser unterdrückt werden. Insbesondere wird die Dichtungsfunktion der schwammartigen Morphologie des Schmiermitteldepots direkt hinter der Wellendichtung auf der nassen Seite erzeugt. Dadurch wird ein potenziell eindringendes Volumen des Mediums gegenüber der abgetrennten Schmierstofffüllung so gering wie möglich gehalten.

Gemäß einem Aspekt der Erfindung kann das poröse Substrat des Schmierstoffdepots zwischen der nassseitigen Wellendichtung und einer Wälzkörperreihe sowie zwischen den Wälzkörperreihen angeordnet sein, und mit der nassseitigen Wellendichtung in Kontakt stehen. Durch eine Erweiterung des Schmierstoffdepots im Verhältnis zur Schmierstofffüllung, werden ein Volumenanteil, der durch die schwammartige Morphologie zur Dichtungsfunktion beiträgt, und eine axiale Dichtungsstrecke, die zur Medientrennung beiträgt, vergrößert.

Gemäß einem Aspekt der Erfindung kann das poröse Substrat des Schmierstoffdepots zwischen der nassseitigen Wellendichtung und einer Wälzkörperreihe, zwischen den Wälzkörperreihen, sowie zwischen einer Wälzkörperreihe und der trockenseitigen Wellendichtung angeordnet sein, und sowohl mit der nassseitigen Wellendichtung als auch der trockenseitigen Wellendichtung in Kontakt stehen. Durch die Erweiterung des Schmierstoffdepots im Verhältnis zur Schmierstofffüllung wird der Volumenanteil, der durch die schwammartige Morphologie zur Dichtungsfunktion beiträgt, nochmals vergrößert und die axiale Dichtungsstrecke, die zur Medientrennung beiträgt, wird maximiert. Außerdem wird auch die Wellendichtung zur trockenen Seite nicht ausschließlich durch die Schmierstofffüllung versorgt, sondern steht ebenfalls mit dem gesättigten Substrat des Schmierstoffdepots in Kontakt. Dadurch kann wiederum eine konstantere oder gegen Druckschwankungen unempfindlichere Schmierfilmbildung an der entsprechenden Dichtungslippe sichergestellt werden und es kann eine Leckage des Schmierstoffs zur trockenen Seite besser unterbunden werden.

Gemäß einem Aspekt der Erfindung kann sich das poröse Substrat des Schmierstoffdepots durch Freiräume einer Wälzkörperreihe und Freiräume des wenigstens einen Wälzkörperkäfigs hindurch erstrecken. Durch die zusätzliche Erweiterung des Schmierstoffdepots im Verhältnis zur Schmierstofffüllung wird der Volumenanteil, der durch die schwammartige Morphologie zur Dichtungsfunktion beiträgt, maximiert.

Gemäß einem Aspekt der Erfindung kann das Volumen des Substrats vollständig aus einer Struktur mit offenen Poren ausgebildet sein, und die offenen Poren mit dem Schmierstoff gesättigt sein. Dadurch wird die schwammartige Morphologie des Schmierstoffdepots optimiert.

Gemäß einem Aspekt der Erfindung kann das Substrat aus einer Polymermatrix mit einer definierten Porosität hergestellt sein. Durch die Polymermatrix lässt sich ein poröses Substrat realisieren, das optimierte Eigenschaften bezüglich einer geeigneten Porengröße und einer geeigneten Elastizität für das Schmierstoffdepot bereitstellt.

Gemäß einem Aspekt der Erfindung kann der Schmierstoff ein Öl sein. Dadurch lässt sich eine anwendungsoptimierte Viskosität der Schmierstofffüllung in Bezug auf die Schmierungs-, Dichtungs- und Leckageeigenschaften einstellen.

Gemäß einem Aspekt der Erfindung kann eine Dichtungslippe der trockenseitigen Wellendichtung zu einer Wälzlagerreihe geneigt sein. Dadurch wird eine Anpressung der Dichtlippe auf den Wellenumfang erzielt.

Gemäß einem Aspekt der Erfindung kann die trockenseitige Wellendichtung aus einem Vinyliden(di)fluorid enthaltenden Fluorkautschuk hergestellt sein. Durch die Auswahl von einem Fluorkautschuk mit Vinyliden(di)fluorid, bzw. abgekürzt FKM, werden anwendungsoptimierte Eigenschaften der Reibung und Lebensdauer einer Dichtungslippe auf dem Wellenumfang an der trockenen Seite erzielt.

Gemäß einem Aspekt der Erfindung kann die nassseitige Wellendichtung aus Polytetrafluorethylen hergestellt sein. Durch die Auswahl von Polytetrafluorethylen, bzw. abgekürzt PTFE, werden anwendungsoptimierte Eigenschaften der Reibung und Lebensdauer einer Dichtungslippe auf dem Wellenumfang an der nassen Seite erzielt.

Gemäß einem Aspekt der Erfindung ist eine Wasserpumpe für einen Kühlmittelkreislauf in einem Fahrzeug vorgesehen, bei der das Wälzlager mit der Dichtungsanordnung in einem Pumpengehäuse zwischen einer Pumpenkammer, in der eine Pumpenwelle mit einem Pumpenlaufrad verbunden ist, und einer Antriebsseite des Pumpengehäuses, auf der die Pumpenwelle angetrieben wird, angeordnet ist. Der Einsatz als einziges Kompaktlager für eine Welle in einer bezüglich des Bauraums optimierten Pumpe stellt ein bevorzugtes, schutzwürdiges Produkt dar, welches das Wälzlager mit Dichtungsanordnung umfasst.

Gemäß einem Aspekt der Erfindung ist eine dementsprechende elektrische Wasserpumpe vorgesehen, die einen Elektromotor vom Trockenläufertyp, der mit der Pumpenwelle verbunden ist, aufweist. Dieser Pumpentyp stellt ein bevorzugtes, schutzwürdiges Produkt zum Einsatz der Dichtungsfunktion des Wälzlagers mit Dichtungsanordnung dar.

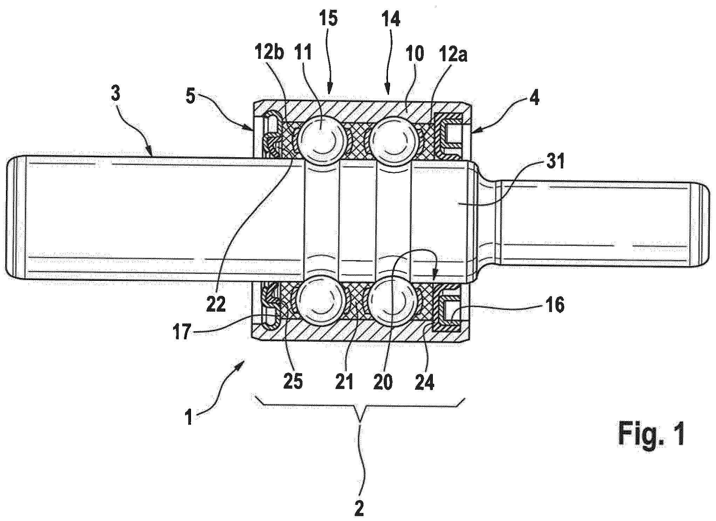

Die Erfindung wird nachfolgend anhand eines Ausführungsbeispiels mit Bezug auf Fig. 1 beschrieben.
- Fig. 1: zeigt einen freigestellten Längsschnitt des Wälzlagers mit Dichtungsanordnung gemäß einer Ausführungsform der Erfindung.

Fig. 1 zeigt ein Wälzlager 1 in Form eines Kompaktlagers, das sowohl radiale Kräfte als auch axiale Kräfte einer Welle 3 aufnimmt und somit als einzige Einheit zur Wellenlagerung geeignet ist. In dem Wälzlager 1 ist eine Welle 3 gelagert, und ein Teil der Welle 3, der innerhalb eines Außenrings 10 des Wälzlagers 1 liegt, ist als Wellenlagerabschnitt 31 bezeichnet. In einer inneren Mantelfläche eines Außenrings 10 sind zwei axial benachbarte und radial umlaufende Nuten mit einer runden Kontur als Laufbahnen für kugelförmige Wälzkörper 11 ausgebildet. An einem Wellenumfang des Wellenlagerabschnitts 31 sind gegenüberliegend in gleicher Weise zwei axial benachbarte und radial umlaufende Nuten mit einer runden Kontur als Laufbahnen für die kugelförmigen Wälzkörper 11 ausgebildet. Die Wälzkörper 11 sind in zwei Wälzkörperkäfigen 12a, 12b rollfähig aufgenommen und werden durch die Wälzkörperkäfige 12a, 12b in gleichmäßigen Abständen in Umfangsrichtung der Laufbahnen gehalten. Die beiden Formationen von Wälzkörpern 11, die mit den Wälzkörperkäfigen 12a, 12b in den beiden Laufbahnen geführt sind, stellen zwei Wälzkörperreihen 14, 15 dar. Durch den axialen Abstand der beiden Wälzkörperreihen 14, 15 und durch Verwendung der kugelförmigen Wälzkörper 11 in komplementären Nuten mit runder Kontur, ist eine Krafteinleitung von axialen und radialen Kräften zwischen der Welle 3 und dem Außenring 10 sichergestellt.

Das abgedichtete Wälzlager 1 ist dazu ausgelegt, die zu lagernde Welle 3 zwischen einer nassen Seite 4, die mit einem flüssigen Medium in Kontakt steht, und einer trockenen Seite 5, wie z. B. einem Hohlraum oder einer Außenseite abzudichten, so dass das flüssige Medium auch bei einer Druckdifferenz zwischen den beiden Seiten 4 und 5 nicht durch das Wälzlager 1 axial hindurch tritt. Hierfür ist das Wälzlager 1 mit einer Dichtungsanordnung 2 ausgestattet. Die Dichtungsanordnung 2 des Wälzlagers 1 umfasst eine nassseitige Wellendichtung 24, eine trockenseitige Wellendichtung 25 und ein dichtungswirksames Schmierstoffdepot 20.

Die nassseitige Wellendichtung 24 ist ein radialer Wellendichtring mit einer dynamischen Dichtfläche zur Welle 3 und schließt eine radiale Öffnung zwischen dem Wellenlagerabschnitt 31 und dem Außenring 10 ab. Die Wellendichtung 24 wird mittels eines Klemmrings 16 in einer radial nach außen vertieften stufenförmigen Nut in dem Außenring 1 gehalten. Eine Dichtungslippe der Wellendichtung 24 weist einen Kragen auf dem Wellenumfang auf, der nach außen zur nassen Seite 4 weist. Die Wellendichtung 24 zu der nassen Seite 4 besteht aus PTFE. Die trockenseitige Wellendichtung 25 ist ebenfalls ein radialer Wellendichtring mit einer dynamischen Dichtfläche zur Welle 3, der eine radiale Öffnung zwischen dem Wellenlagerabschnitt 31 und dem Außenring 10 abschließt. Die Wellendichtung 24 wird mittels eines ringförmigen Stützblechs 17 in einer radial nach außen vertieften stufenförmigen Nut in dem Außenring 1 gehalten und zur Innenseite des Wälzlagers 1 beaufschlagt. Dementsprechend ist eine Dichtlippe der Wellendichtung 25 einwärts zu der Wälzlagerreihe 15, genauer genommen zu einem Abschnitt des Schmierstoffdepots 20 geneigt. Ein Freiraum zwischen einem radial äußeren Teil der Wellendichtung 25 und dem Abschnitt des Schmierstoffdepots 20 wird von einer Schmierstofffüllung 22 eingenommen. Die Wellendichtung 25 zu der trockenen Seite 5 besteht aus FKM.

In Fig.l ist das Schmierstoffdepot 20 durch eine karierte Schraffur dargestellt. Bei der dargestellten Ausführungsform nimmt das Schmierstoffdepot 20 in drei Abschnitten des Wälzlagers 1 Freiräume zwischen den Wellendichtunen 24, 25 und den Wälzkörperreihen 14, 15 ein. In einem Freiraum zwischen der nassseitigen Wellendichtung 24 und der nächstliegenden Wälzkörperreihe 14 ist ein Abschnitt des Schmierstoffdepots 20 angeordnet, der als erster Abschnitt mit einem potenziell eindringenden flüssigen Medium in Kontakt gelangt. Dieser zur nassen Seite 24 gerichtete Abschnitt des Schmierstoffdepots 20 stellt, im Gegensatz zur den beiden dahinterliegenden optionalen Abschnitten, einen essenziellen Abschnitt und Ausgangspunkt bezüglich der Dichtungsfunktion des Schmierstoffdepots 20 dar, wie nachstehend erläutert wird.

In abgrenzender Definition zu einem übrigen Volumen einer Schmierstofffüllung 22, setzt sich das Schmierstoffdepot 20 aus einem Volumen des porösen Substrats 21 als Grundstruktur zur lokalen Bindung des Schmierstoffs, und aus einem Volumen des Schmierstoffs, der in dem porösen Substrat 21 gebundenen ist, zusammen. Das Substrat 21 des Schmierstoffdepots 20 steht umlaufend mit der Welle 3 und dem Außenring 10 in radialem Kontakt. In der vorliegenden Ausführungsform erstreckt sich das poröse Substrat 21 auch zwischen den Abschnitten des Schmierstoffdepots 20 durch Freiräume der Wälzkörperreihen 14, 15 hindurch. Das Schmierstoffdepot 20 weist eine schwammartige Morphologie auf. Die Abschnitte des Schmierstoffdepots 20 stehen untereinander sowie mit der Schmierstofffüllung 22 in einer Flüssigkeitsverbindung. Die Schmierstofffüllung 22 ist ein Flüssigkeitspolster desselben Schmierstoffs, das ein verbleibendes Volumen zu dem Schmierstoffdepot 20 in dem Wälzlager 1 zwischen den Wellendichtungen 24 und 25 ausfüllt. Ein Teil der Schmierstofffüllung 22 in einem Freiraum der Wellendichtung 25 ist in Fig. 1 senkrecht schraffiert dargestellt ist.

Das Schmierstoffdepot 20 ist eines der eingangs erwähnten hybriden Schmiermittel, deren Prinzip als "Solid Oil" bezeichnet wird. Das poröse Substrat 21 besteht aus einer elastisch flexiblen Polymermatrix, vorzugsweise aus einem sogenannten Mikrozella mit einer kapillar wirkenden offenen Porenstruktur. Der Schmierstoff, der in den Poren des Substrats 21 des Schmierstoffdepots 20 absorbiert ist bzw. in Übersättigung abgegeben wird, und der auch die Schmierstofffüllung 22 bildet, ist ein Schmieröl aus synthetischen Kohlenwasserstoffen, ein Silikonöl, ein Estheröl oder dergleichen, dessen Viskosität auf eine Porosität des Substrats 21 sowie eine Belastung des Wälzlagers 1 eingestellt ist.

Die Dichtungsfunktion der Dichtungsanordnung 2 tritt in einem Zusammenwirken des Schmierstoffdepots 20 mit den Wellendichtungen 24 und 25 unter einem äußerlich einwirkenden Druck eines flüssigen Mediums auf der nassen Seite 4 auf. Infolgedessen tritt eine geringfügige Leckage des Mediums unter der Dichtungslippe der Wellendichtung 24 in das Wälzlager 1 ein, bis ein Druckausgleich hergestellt ist. Der ansteigende Druck von einer rechts dargestellten Seite des Schmierstoffdepots 20 bewirkt eine axiale Komprimierung und radiale Ausdehnung des porösen Substrats 21. Somit erhöht sich eine radiale Pressung des schwammartigen Schmierstoffdepots 20 gegen die Welle 3 und den Außenring 10. Eine wasserunlösliche Eigenschaft des gebundenen Schmierstoffs in dem porösen Substrat 21 stellt eine Medientrennung zwischen dem eingedrungenen Medium und dem dahinterliegenden Abschnitt des Wälzlagers 1 sicher, so dass ein Auswaschen der Schmierstofffüllung 22 verhindert wird. Zudem erhöht sich über die Schmierstofffüllung 22 ein axialer Anpressdruck auf die einwärts geneigte Dichtlippe der trockenseitigen Wellendichtung 25. Da die Dichtlippe durch den Schmierstoff geschmiert wird, ist eine erhöhte Flächenpressung in Bezug auf den Reibungsverschleiß unkritisch.

Nachstehend wird ein nicht dargestelltes Anwendungsbeispiel einer Wasserpumpe beschrieben, in der das abgedichtete Wälzlager 1 eingesetzt wird.

In diesem Fall umfasst ein Pumpengehäuse auf der rechts dargestellten nassen Seite 4 des Wälzlagers 1 eine Pumpenkammer, in der ein Pumpenlaufrad durch die Welle 3 angetrieben wird. Bei einem typischen Aufbau einer solchen Wasserpumpe strömt ein Fördermedium durch einen Ansaugstutzen auf das Pumpenlaufrad zu, wird durch Flügel des Pumpenlaufrads radial nach außen in ein Spiralgehäuse der Pumpenkammer beschleunigt und durch einen Druckstutzen ausgeleitet. Die nassseitige Wellendichtung 24 ist somit hinter dem Pumpenlaufrad an einem Durchtritt der Welle 3 zu der Pumpenkammer angeordnet. Eine Fixierung des Wälzlagers 1 in einem Gehäuseabschnitt, der die Pumpenkammer hinter dem Pumpenlaufrad abgrenzt, kann mittels einer Presspassung des Außenrings 10 in einem Lagersitz vorgesehen sein.

Auf der links dargestellten trockenen Seite 5 befindet sich eine Antriebsseite des Pumpengehäuses. Die Antriebsseite kann als Aufnahmekammer eines Elektromotors ausgebildet sein, der die Welle 3 antreibt. Die trockenseitige Wellendichtung 25 ist somit an einem Durchtritt der Welle 3 zu der Aufnahmekammer angeordnet. Somit entsteht ein kompakter Aufbau einer Pumpe mit geringer axialer Abmessung, bei dem das Wälzlager 1 als einzige Wellenlagereinheit in dem Gehäuse angeordnet ist. Dabei wird der Elektromotor durch die integrierte Dichtungsanordnung 2 des Wälzlagers 1 zuverlässig vor dem Fördermedium in der Pumpenkammer abgedichtet.

In nicht dargestellten Ausführungsformen kann das Schmierstoffdepot 20 lediglich zwischen der nassseitigen Wellendichtung 24 und der Wälzlagerreihe 14 angeordnet sein, oder sich bis zur nächsten Wälzlagerreihe 15 erstrecken, während ein übriges Volumen durch die Schmierstofffüllung 22 eingenommen wird. Auch in diesen oder beliebigen anderen Verhältnissen von Volumenanteilen zwischen Schmierstoffdepot 20 und Schmierstofffüllung 22 kann die erfindungsgemäße Dichtungsfunktion erlangt werden.

In nicht dargestellten, alternativen Ausführungsformen weisen die Wälzkörperreihen andere Formen der Wälzkörper auf. Je nach anwendungsabhängiger Belastung oder Pumpentyp, können die beiden Wälzkörperreihen einer beliebigen Kombination aus kugelförmigen Wälzkörpern 11 und rollenförmigen, walzenförmigen oder nadelförmigen Wälzkörpern 11 oder dergleichen entsprechen. Die Wälzkörperreihen können in einer kombinierten Anordnung achsparallel und senkrecht, oder in einem Neigungswinkel zu der Welle 3 auf einer Laufbahn geführt sein. So kann im Anwendungsfall einer Verdrängerpumpe, bei der höhere Kippmomente an der Welle auftreten, zur nassen Seite 4 hin eine Wälzkörperreihe 14 mit walzenförmigen Wälzkörpern eingesetzt werden, die höhere axiale Kräfte aufnimmt. Ferner können mehr als zwei Wälzlagerreihen 14, 15 in dem Wälzlager 1 axial benachbart angeordnet sein.

### Bezugszeichenliste:

- 1: Wälzlager
- 2: Dichtungsanordnung
- 3: Welle
- 4: nasse Seite
- 5: trockene Seite
- 10: Außenring
- 11: Wälzkörper
- 12a: Wälzkörperkäfig
- 12b: Wälzkörperkäfig
- 14: Wälzkörperreihe
- 15: Wälzkörperreihe
- 16: Klemmring
- 17: Stützblech
- 20: Schmierstoffdepot
- 21: poröses Substrat
- 22: Schmierstofffüllung
- 24: nassseitige Wellendichtung
- 25: trockenseitige Wellendichtung
- 31: Wellenlagerabschnitt

## Patentansprüche

1. Wälzlager (1) für Wasserpumpen, wobei das Wälzlager (1) eine Dichtungsanordnung (2) aufweist und eingerichtet ist zur radialen und axialen Lagerung sowie Abdichtung einer Welle (3) einer Wasserpumpe in einem Gehäuse zwischen einer nassen Seite (4), die mit einem flüssigen Medium in Kontakt steht, das durch die Wasserpumpe strömt, und einer trockenen Seite (5), die eine Antriebsseite darstellt, aufweisend:
einen Außenring (10) und einen Wellenlagerabschnitt (31), an denen Laufbahnen für wenigstens zwei axial benachbarte Wälzkörperreihen (14, 15) ausgebildet sind;
eine Mehrzahl von Wälzkörpern (11), die in wenigstens einem Wälzkörperkäfig (12a, 12b) aufgenommen und den Wälzkörperreihen (14, 15) geführt sind; und
die Dichtungsanordnung (2) mit
einer nassseitigen Wellendichtung (24), die zwischen der nassen Seite (4) und einer Wälzkörperreihe (14) angeordnet ist; und
einer trockenseitigen Wellendichtung (25), die zwischen einer Wälzkörperreihe (15) und der trockenen Seite (5) angeordnet ist;
**dadurch gekennzeichnet, dass** die Dichtungsanordnung (2) ferner
ein Schmierstoffdepot (20) aufweist, das umlaufend in einem radialen Kontakt zu dem Wellenabschnitt (31) und dem Außenring (10) angeordnet ist; wobei
das Schmierstoffdepot (20) zumindest bereichsweise ein poröses Substrat (21) umfasst, das in seinen Poren einen wasserunlöslichen Schmierstoff enthält, wobei ein Volumen des Schmierstoffdepots (20) und ein Volumen einer zu dem Schmierstoffdepot (20) abgegrenzten Schmierstofffüllung (22), die ein mit demselben Schmierstoff gefülltes Flüssigkeitspolster ist, ein Gesamtvolumen von Freiräumen zwischen der nassseitigen Wellendichtung (24) und der trockenseitigen Wellendichtung (25) einnehmen, und
eine Dichtungsfunktion der Dichtungsanordnung (2) durch ein Zusammenwirken des Schmierstoffdepots (20) mit den Wellendichtungen (24 und 25) unter einem äußerlich einwirkenden Druck des flüssigen Mediums auf der nassen Seite (4) bewirkt wird.

2. Wälzlager (1) mit Dichtungsanordnung (2) nach Anspruch 1, wobei
das poröse Substrat (21) des Schmierstoffdepots (20) zwischen der nassseitigen Wellendichtung (24) und einer Wälzkörperreihe (14) angeordnet ist und mit der nassseitigen Wellendichtung (24) in Kontakt steht.

3. Wälzlager (1) mit Dichtungsanordnung (2) nach Anspruch 1, wobei
das poröse Substrat (21) des Schmierstoffdepots (20) zwischen der nassseitigen Wellendichtung (24) und einer Wälzkörperreihe (14) sowie zwischen den Wälzkörperreihen (14, 15) angeordnet ist, und mit der nassseitigen Wellendichtung (24) in Kontakt steht.

4. Wälzlager (1) mit Dichtungsanordnung (2) nach Anspruch 1, wobei
das poröse Substrat (21) des Schmierstoffdepots (20) zwischen der nassseitigen Wellendichtung (24) und einer Wälzkörperreihe (14), zwischen den Wälzkörperreihen (14, 15) sowie zwischen einer Wälzkörperreihe (15) und der trockenseitigen Wellendichtung (25) angeordnet ist, und sowohl mit der nassseitigen Wellendichtung (24) als auch der trockenseitigen Wellendichtung (25) in Kontakt steht.

5. Wälzlager (1) mit Dichtungsanordnung (2) nach einem der Ansprüche 1 bis 4, wobei
sich das poröse Substrat (21) des Schmierstoffdepots (20) durch Freiräume einer Wälzkörperreihe (14, 15) und Freiräume des wenigstens einen Wälzkörperkäfigs (12a, 12b) hindurch erstreckt.

6. Wälzlager (1) mit Dichtungsanordnung (2) nach einem der Ansprüche 1 bis 5, wobei
das Volumen des Substrats (21) vollständig aus einer Struktur mit offenen Poren ausgebildet ist, und die offenen Poren mit dem Schmierstoff gesättigt sind.

7. Wälzlager (1) mit Dichtungsanordnung (2) nach einem der Ansprüche 1 bis 6, wobei
das Substrat (21) aus einer elastisch flexiblen Polymermatrix mit einer definierten Porosität hergestellt ist.

8. Wälzlager (1) mit Dichtungsanordnung (2) nach einem der Ansprüche 1 bis 7, wobei
der Schmierstoff ein Öl ist.

9. Wälzlager (1) mit Dichtungsanordnung (2) nach einem der Ansprüche 1 bis 8, wobei
eine Dichtungslippe der trockenseitigen Wellendichtung (25) zu einer Wälzlagerreihe (15) geneigt ist.

10. Wälzlager (1) mit Dichtungsanordnung (2) nach einem der Ansprüche 1 bis 9, wobei
die trockenseitige Wellendichtung (25) aus einem Vinyliden(di)fluorid enthaltenden Fluorkautschuk hergestellt ist.

11. Wälzlager (1) mit Dichtungsanordnung (2) nach einem der Ansprüche 1 bis 10, wobei
die nassseitige Wellendichtung (24) aus Polytetrafluorethylen hergestellt ist.

12. Wasserpumpe für einen Kühlmittelkreislauf in einem Fahrzeug, aufweisend
ein Wälzlager (1) mit Dichtungsanordnung (2) nach einem der vorhergehenden Ansprüche, wobei
das Wälzlager (1) mit der Dichtungsanordnung (2) in einem Pumpengehäuse zwischen einer Pumpenkammer (4), in der eine Pumpenwelle (3) mit einem Pumpenlaufrad verbunden ist, und einer Antriebsseite (5) des Pumpengehäuses, auf der die Pumpenwelle (3) angetrieben wird, angeordnet ist.

13. Wasserpumpe nach Anspruch 12, ferner aufweisend
einen Elektromotor vom Trockenläufertyp, der mit der Pumpenwelle (3) verbunden ist.

## Claims

1. A rolling bearing (1) for water pumps, wherein the rolling bearing (1) comprises a sealing arrangement (2) and is configured for radial and axial mounting as well as sealing of a shaft (3) of a water pump in a housing between a wet side (4) which is in contact with a liquid medium which flows through the water pump, and a dry side (5) which constitutes a drive side, comprising:
an outer ring (10) and a shaft bearing section (31) at which raceways for at least two axially adjacent rolling-element rows (14, 15) are formed;
a plurality of rolling elements (11) that are accommodated in at least one rolling-element cage (12a, 12b) and guided in the rolling-element rows (14, 15); and
the sealing arrangement (2) having
a wet-side shaft seal (24) arranged between the wet side (4) and a rolling-element row (14); and
a dry-side shaft seal (25) arranged between a rolling-element row (15) and the dry side (5);
**characterized in that** the sealing arrangement (2) further comprises
a lubricant reservoir (20) which is arranged circumferentially in a radial contact to the shaft section (31) and the outer ring (10); wherein
the lubricant reservoir (20) comprises a substrate (21) that is porous in at least some sections which, in its pores, includes a lubricant insoluble in water, wherein a volume of the lubricant reservoir (20) and a volume of a lubricant filling (22) which is delimited with respect to the lubricant reservoir (20) and is a liquid cushion filled with the same lubricant, take up a total volume of spaces between the wet-side shaft seal (24) and the dry-side shaft seal (25), and
a sealing function of the sealing arrangement (2) is effected by an interaction of the lubricant reservoir (20) with the shaft seals (24 and 25) under an externally acting pressure of the liquid medium on the wet side (4).

2. The rolling bearing (1) having the sealing arrangement (2) according to claim 1, wherein
the porous substrate (21) of the lubricant reservoir (20) is arranged between the wet-side shaft seal (24) and a rolling-element row (14) and is in contact with the wet-side shaft seal (24).

3. The rolling bearing (1) having the sealing arrangement (2) according to claim 1, wherein
the porous substrate (21) of the lubricant reservoir (20) is arranged between the wet-side shaft seal (24) and a rolling-element row (14), as well as between the rolling-element rows (14, 15), and is in contact with the wet-side shaft seal (24).

4. The rolling bearing (1) having the sealing arrangement (2) according to claim 1, wherein
the porous substrate (21) of the lubricant reservoir (20) is arranged between the wet-side shaft seal (24) and a rolling-element row (14), between the rolling-element rows (14, 15), as well as between a rolling-element row (15) and the dry-side shaft seal (25), and is in contact with both the wet-side shaft seal (24) as well as the dry-side shaft seal (25).

5. The rolling bearing (1) having the sealing arrangement (2) according to any one of claims 1 to 4, wherein
the porous substrate (21) of the lubricant reservoir (20) extends through spaces of a rolling-element row (14, 15) and through spaces of the at least one rolling-element cage (12a, 12b).

6. The rolling bearing (1) having the sealing arrangement (2) according to any one of claims 1 to 5, wherein
the volume of the substrate (21) is entirely formed of a structure with open pores, and the open pores are saturated with the lubricant.

7. The rolling bearing (1) having the sealing arrangement (2) according to any one of claims 1 to 6, wherein
the substrate (21) is made of an elastically flexible polymer matrix with a defined porosity.

8. The rolling bearing (1) having the sealing arrangement (2) according to any one of claims 1 to 7, wherein
the lubricant is an oil.

9. The rolling bearing (1) having the sealing arrangement (2) according to any one of claims 1 to 8, wherein
a sealing lip of the dry-side shaft seal (25) is inclined towards a rolling bearing row (15).

10. The rolling bearing (1) having the sealing arrangement (2) according to any one of claims 1 to 9, wherein
the dry-side shaft seal (25) is made of a fluororubber including vinylidene (di)fluoride.

11. The rolling bearing (1) having the sealing arrangement (2) according to any one of claims 1 to 10, wherein
the wet-side shaft seal (24) is made of polytetrafluorethylene.

12. A water pump for a coolant circuit in a vehicle comprising
a rolling bearing (1) having the sealing arrangement (2) according to any one of the previous claims, wherein
the rolling bearing (1) having the sealing arrangement (2) is arranged inside a pump housing between a pump chamber (4), in which a pump shaft (3) is connected with a pump impeller, and a drive side (5) of the pump housing, on which the pump shaft (3) is driven.

13. The water pump according to claim 12, further comprising
an electric motor of a dry-runner type which is connected to the pump shaft (3).

## Revendications

1. Roulement (1) pour des pompes à eau,
le roulement (1) comporte un dispositif d'étanchéité (2) et il est conçu pour le montage radial et axial ainsi que pour l'étanchéité d'un arbre (3) d'une pompe à eau dans un boîtier entre un côté humide (4) en contact avec le milieu liquide traversant la pompe à eau et un côté sec (5) correspondant au côté d'entraînement, comprenant :
- une bague extérieure (10) et un segment d'arbre (31) munis de chemins de circulation pour au moins deux rangées d'organes de roulement (14, 15) axialement voisins,
- un ensemble d'organes de roulement (11) qui sont logés dans au moins une cage (12a, 12b) et guidés dans des rangées d'organes de roulement (14, 15), et
- le dispositif d'étanchéité (2) ayant :
* un joint d'arbre côté humide (24) installé entre le côté humide (4) et une rangée d'organes de roulement (14), et
* un joint d'arbre côté sec (25) entre une rangée d'organes de roulement (15) et le côté sec (5),
roulement **caractérisé en ce que**
le dispositif d'étanchéité (2) comporte en outre :
- une réserve de lubrifiant (20) qui est en contact radial, périphérique avec le joint d'arbre (31) et la bague extérieure (10),
* la réserve de lubrifiant (20) comprenant au moins par zones, un support poreux (21) dont les pores contiennent un lubrifiant non soluble dans l'eau,
* le volume de la réserve de lubrifiant (20) et le volume d'un remplissage de lubrifiant (22) délimité par rapport à la réserve de lubrifiant (20), et qui est un coussin de lubrifiant rempli du même lubrifiant, occupent un volume global d'espace libre entre le joint d'arbre côté humide (24) et le joint d'arbre côté sec (25), et
- la fonction d'étanchéité du dispositif d'étanchéité (2) est réalisée par la coopération de la réserve de lubrifiant (20) avec les joints d'arbre (24, 25) sous une pression agissant de l'extérieur du milieu liquide sur le côté humide (4).

2. Roulement (1) comportant un dispositif d'étanchéité (2) selon la revendication 1,
dans lequel
le support poreux (21) de la réserve de lubrifiant (20) est entre le joint d'arbre côté humide (24) et une rangée d'organes de roulement (14) en étant en contact avec le joint d'arbre, côté humide (24).

3. Roulement (1) comportant un dispositif d'étanchéité (2) selon la revendication 1,
dans lequel
le support poreux (21) de la réserve de lubrifiant (20) est entre le joint d'arbre, côté humide (24) et une rangée d'organes de roulement (14) ainsi qu'entre les rangées d'organes de roulement (14, 15) en étant en contact avec le joint d'arbre côté humide (24).

4. Roulement (1) comportant un dispositif d'étanchéité (2) selon la revendication 1,
dans lequel
le support poreux (21) de la réserve de lubrifiant (20) est entre le joint d'arbre côté humide (24) et une rangée d'organes de roulement (14), entre les rangées d'organes de roulement (14, 15) ainsi qu'entre une rangée d'organes de roulement (15) et le joint d'arbre côté sec (25) en étant en contact à la fois avec le joint d'arbre côté humide (24) et avec le joint d'arbre côté sec (25).

5. Roulement (1) comportant un dispositif d'étanchéité (2) selon l'une des revendications 1 à 4,
dans lequel
le support poreux (21) de la réserve de lubrifiant (20) traverse les espaces libres d'une rangée d'organes de roulement (14, 15) et les espaces libres d'au moins une cage d'organes de roulement (12a, 12b).

6. Roulement (1) comportant un dispositif d'étanchéité (2) selon l'une des revendications 1 à 5,
dans lequel
le volume du support (21) est formé en totalité d'une structure à pores ouverts et les pores ouverts sont remplis à saturation de lubrifiant.

7. Roulement (1) comportant un dispositif d'étanchéité (2) selon l'une des revendications 1 à 6,
dans lequel
le support (21) est en une matrice de polymère flexible élastique ayant une porosité définie.

8. Roulement (1) comportant un dispositif d'étanchéité (2) selon l'une des revendications 1 à 7,
dans lequel
le lubrifiant est une huile.

9. Roulement (1) comportant un dispositif d'étanchéité (2) selon l'une des revendications 1 à 8,
dans lequel
la lèvre d'étanchéité du joint d'arbre côté sec (25) est inclinée par rapport à une rangée d'organes de roulement (15).

10. Roulement (1) comportant un dispositif d'étanchéité (2) selon l'une des revendications 1 à 9,
dans lequel
le joint d'arbre côté sec (25) est réalisé en un caoutchouc au fluor contenant du difluorure de Vynyliden.

11. Roulement (1) comportant un dispositif d'étanchéité (2) selon l'une des revendications 1 à 10,
dans lequel
le joint d'arbre côté humide (24) est en polytétrafluoréthylène.

12. Pompe à eau comportant un circuit d'agent de refroidissement dans un véhicule ayant :
- un palier à roulement (1) muni d'un dispositif d'étanchéité (2) selon l'une des revendications précédentes, dans lequel
- le roulement (1) et installé avec le dispositif d'étanchéité (2) dans un boîtier de pompe entre une chambre de pompe (4) dans laquelle l'arbre de pompe (3) est relié à un rotor de pompe et un côté à entraînement (5) du boîtier de pompe sur lequel l'arbre de pompe (3) est entraîné.

13. Pompe à eau selon la revendication 12,
comprenant en outre :
- un moteur électrique de type à rotor sec relié à l'arbre de pompe (3).
